# EUROPEAN PATENT APPLICATION

(11) **EP 3 037 966 A1**
(43) Date of publication of application: **29.06.2016**
(21) Application number: 15157228.6
(22) Date of filing: 02.03.2015
(51) Int. Cl.: G06F 11/14, G06F 11/20

(54) **System backup device and backup method**

(30) Priority: 26.12.2014 JP 2014263842
(71) Applicant: Hitachi, Ltd., Tokyo (JP)
(72) Inventor: Yasuda, Yoshiko, Chiyoda-ku, Tokyo 100-8280 (JP); Himura, Yosuke, Chiyoda-ku, Tokyo 100-8280 (JP)
(74) Representative: Moore, Graeme Patrick

(57) **Abstract**

A backup device (100) quickly reflects a configuration change in an information processing system (145), constructed in the main site virtualization infrastructure, on an information processing system (155) constructed in the sub-site virtualization infrastructure for ensuring compatibility between the information processing systems. When a change in the system data on the information processing system (145) constructed in the virtualization infrastructure in the main site (101) is detected, the backup device (100) identifies a server in the sub-site (102) corresponding to the change position in the main site (101) based on mapping information (122) on the servers configuring the information processing systems (145, 155) in the main site (101) and the sub-site (102) and updates the identified server and the mapping information (122).

## Description

### BACKGROUND OF THE INVENTION

The present invention relates to a system backup, and more particularly to a system backup between different virtualization infrastructures.

Recently, cloud computing (cloud) is applied to a data center (DC). In a general cloud, a DC operator constructs a plurality of company systems or a plurality of intra-company business systems on an information processing system, composed of a server, storage, and a network system, by visualizing these systems. A cloud, which is based on the virtualization technique, is superior to a physical system in expandability. On the other hand, a cloud, where a plurality of information processing systems is integrated into a single information processing system, is complicated because the plurality of information processing systems is mixed (multi tenants are included). A virtualized information processing system of each customer or a virtualized business system, which is integrated into a cloud, is called a tenant.

Today, for the purpose of disaster recovery, a cloud-based disaster recovery service is emerging. In this cloud-based disaster recovery service, the backup site (sub-site) of an existing information processing system in a main site is constructed at a geographically distant cloud and data is transferred between two sites via a network. Utilizing this cloud-based disaster recovery service eliminates the need for the customer to purchase or construct the devices that are used at a sub-site, thus reducing the time for constructing and starting the sub-site and, at the same time, reducing the cost. There are many types of information processing systems such as an intra-company system that has been used in a company, a system hosted on a data center, and a tenant constructed in a cloud (multi-tenant type information processing system) provided by a data center service provider. Therefore, there are various types of disaster recover, for example, disaster recovery from a customer site (on premise) to a cloud, disaster recovery from one cloud to another cloud, and so on.

In conventional disaster recovery method, two systems with the same configuration, in which the same server device and the same storage device are used, are constructed in a main site and a sub-site and, using the data copy function equipped by the storage device, data on the main site is copied regularly to the sub-site. However, when a cloud is used for a sub-site, the systems with the same configuration cannot be constructed in the main site and the sub-site. This is because the server, network, storage, and virtualization infrastructure used for constructing a system differ between the sites. In such a case, the data copy function equipped by a storage device, which has been used as a common method, cannot be used. Instead, the copy method that copies data from a main site to a sub-site via a network is used (server-based data copy function).

When the server-based data copy function is used, the user data of the main site is copied to the sub-site. For example, the user data corresponds to data stored in a data area used by a database. In conventional disaster recovery method in which a system with the same configuration can be constructed in the sub-site, the operation of an information processing system is guaranteed after switchover to the sub-site by copying the user data. However, when the sub-site is constructed on the cloud in which a system with the same configuration as that of the main site cannot be constructed, the operation of the system cannot be guaranteed after switchover to the sub-site by copying the user data. To guarantee the operation of the system, it is necessary to reflect not only user data but also various types of information about the system, what is called system data, on the sub-site.

The system data includes the system disk information and the system configuration information. The system disk information includes the setting information and the version information about the operating system and the information about the areas used by the operating system such as the setting information about the applications operating under the operating system. The system configuration information includes the server configuration information and the system topology information. The server configuration information includes the server specification information such as the information about the CPU frequency and the memory size or, for the cloud, the instance type. The server configuration information also includes the information about the Network Interface Card (NIC) and the disks attached to the server. The system topology information includes the information about the number of servers used in the information processing system and the information about the dependency relation between the servers. To acquire a backup of the system disk information included in the system data, the image-based copy technology and the image-based conversion technology are available.

There are the following patent documents for the image-based copy technology between multiple sites. JP-A-2011-123891 discloses a method for image-based copying a virtual machine from a first system to a second system via a network (paragraph 0004). JP-A-2011-70627 discloses a server-image migration technology that can limit the transfer amount when a virtual server image is transferred between systems (paragraph 0008).

The image conversion technology is a technology for reflecting a backup of the system disk information on a system in a different virtualization infrastructure. The use of the image conversion technology allows the format of an image, acquired in one virtualization infrastructure, to be converted to a format for operating in another virtualization infrastructure so that the image can be used in that infrastructure. For example, as the image conversion technology, there are methods for converting the format of the image of multiple types of virtual server to another format such as Virtual Machine Disk (VMDK) and Virtual Hard Disk (VHD).

The technologies described in JP-A-2011-123891 and JP-A-2011-70627 assume that the configuration of the information processing system in the main site is same as the configuration of the information processing system in the sub-site. However, the information processing system in the main site of disaster recovery is constructed usually by a plurality of servers (physical or virtual). In the information processing system, the servers with various specifications are used according to the customer's need and, in addition, different operating systems and different applications are installed in these servers. In such a system, the timing for updating the system data is different among each server. For example, in one case, when a security patch must be installed on the operating system of a server that is used as a web server and, in this case, the version of the operating system is updated. In another case, when a virtual server is restarted due to its failure, the specification of the virtual server, for example, the instance type of the virtual server, may be changed. In still another case, if an auto-scaling function is enabled when the cloud service is used for a virtual server, the number of web servers may increase or decrease than the initial setting. In addition, as the system is used for a long time, the number of disks attached to a virtual server may be increased. The access control change between servers also involves a change in the system data.

### SUMMARY OF THE INVENTION

In view of the foregoing, it is an object of the present invention to quickly reflect a configuration change in the information processing system, constructed in the main site virtualization infrastructure, on the information processing system constructed in the sub-site virtualization infrastructure for ensuring compatibility between the information processing systems.

When a change in the system data on the information processing system constructed in the virtualization infrastructure in the main site is detected, a backup device according to the present invention specifies a server in the sub-site corresponding to the change position in the main site based on mapping information on the servers configuring the information processing systems in the main site and the sub-site and updates the specified server and the mapping information.

More specifically, the backup control device according to the present invention is connected to a first system and a second system, the first system being constructed in a first virtualization infrastructure, the second system being constructed in a second virtualization infrastructure, the second system being a backup of the first system. The backup control device includes system data that includes information about a topology of the first and second systems and configuration information on one or more servers configuring each of the first and second systems; a mapping table that indicates a correspondence between the one or more servers configuring the first system and the one or more servers configuring the second system; a change position identification unit that, when the system data on the first system is changed, specifies a first server in the first system in which the change is generated; a mapping unit that determines whether there is a second server in the second system associated with the first server based on the mapping table; a backup processing unit that generates an image of the first server and transfers the generated image to the second virtualization infrastructure; a server update unit that generates a third server based on the transferred image; and a table update unit that updates the system data on the first and second systems and the mapping table based on configuration information on the third server.

According to the present invention, a configuration change in the information processing system constructed in the main site virtualization infrastructure is reflected quickly on the information processing system constructed in the sub-site virtualization infrastructure for ensuring compatibility between the information processing systems. This ensures that the information processing system in the sub-site operates properly after the system is switched from the main site to the sub-site.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing a system configuration in an embodiment of the present invention.
FIG. 2 is a diagram showing an example of a configuration of a system data management table 120.
FIG. 3 is a diagram showing an example of a configuration of a system topology table 201.
FIG. 4 is a diagram showing an example of a configuration of a server configuration table 202.
FIG. 5 is a diagram showing an example of a configuration of an image mapping table 122.
FIG. 6 is a diagram showing a backup processing flow of system data.
FIG. 7 is a diagram showing a processing flow of mapping processing.
FIG. 8 is a diagram showing a processing flow of image backup processing.
FIG. 9 is a diagram showing a processing flow of server update processing.
FIG. 10 is a diagram showing an example of a configuration of a server update unit 115.
FIG. 11 is a diagram showing an example of the GUI operation screen.

### DESCRIPTION OF THE EMBODIMENTS

Embodiments will be described below with reference to the drawings.

### FIRST EMBODIMENT

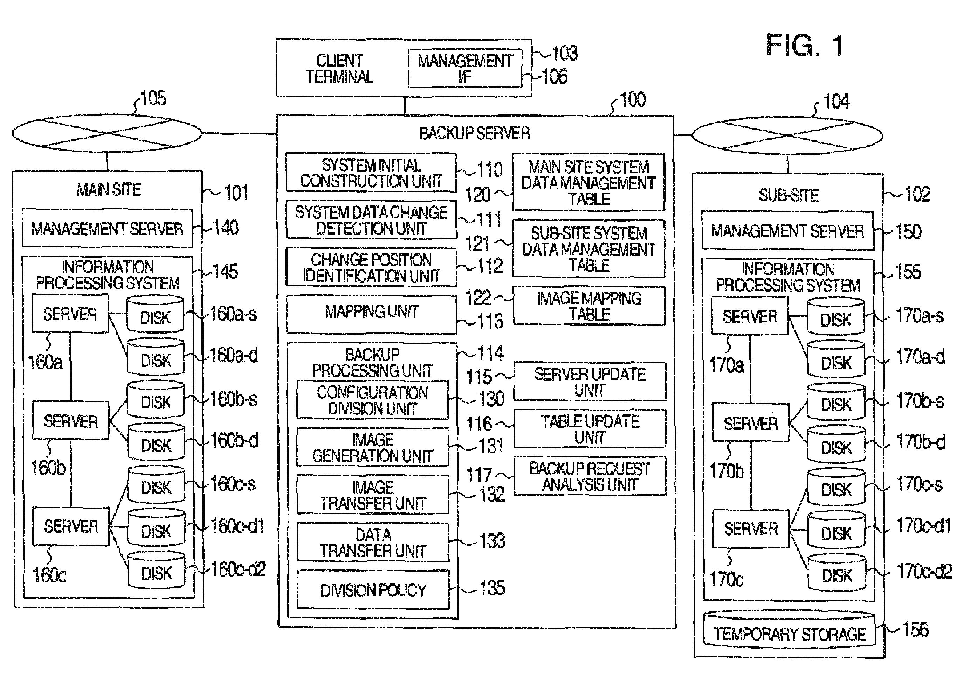

FIG. 1 is a diagram showing an overall system configuration in an embodiment of the present invention. The system in this embodiment includes a backup server 100, a main site 101, a sub-site 102, a client terminal 103, a network 104, and a network 105. The client terminal 103 includes a management I/F 106.

The main site 101 has a management server 140 and includes an information processing system 145. The information processing system 145, a system composed of a plurality of servers, includes servers 160a, 160b, and 160c. Each server may be a physical server or a virtual server. The servers are connected with each other via a virtual network or a physical network.

The server 160a includes a disk 160a-s and a disk 160a-d, and the server 160b includes a disk 160b-s and a disk 160b-d. The server 160c includes three disks (160c-s, 160c-d1, 160c-d2). The servers are not limited to these configurations. The disk 160a-s, disk 160b-s, and disk 160c-s are system disks, and the disks 160a-d, 160b-d, 160c-d1, and 160c-d2 are data disks. The system disk, on which the operating system (OS) and applications are installed, includes the setting information for the OS and the applications. For example, when the information processing system 145 is a three-layer system, the web server applications are installed on the server 160a, the AP server applications are installed on the server 160b, and database applications are installed on the server 160c. The servers are managed by the management server 140.

The sub-site 102, in which an information processing system 155 is constructed, is managed by a management server 150. The sub-site 102 also includes temporary storage 156 in which the system disk image, transferred from the main site and converted, is temporarily stored. The information processing system 155 is constructed as a backup system of the information processing system 145.

Although not shown, an agent is included in each server in some cases. An agent has the function to notify the backup server 100 when the setting information for the OS or applications installed on the server will be changed.

If a change in the system data on the information processing system 145 is detected, the backup server 100 specifies the changed position, where the system data is changed in the information processing system 145, and updates the system data on the information processing system 155 in the sub-site 102 according to the changed position.

Although this embodiment shows the example that the backup server 100 is located the place where it can access the main site 101 and the sub-site 102 via a network, the backup server 100 may be located in the main site 101 or in the sub-site 102. The backup server 100 may be located at any place where it can access the management server in a site.

The backup server 100 includes the following: backup request analysis unit 117, system initial construction unit 110, system data change detection unit 111, change position identification unit 112, mapping unit 113, backup processing unit 114, server update unit 115, table update unit 116, main site system data management table 120, sub-site system data management table 121, and image mapping table 122.

The backup request analysis unit 117 accepts a backup request from the client terminal 103 and, according to the analysis result, performs corresponding processing. Backup requests include a backup system creation request, a backup server start request, and a system data backup request for a particular server. Note that the backup requests are not limited to these requests. If the request is a backup system creation request as a result of the analysis of the request, the backup request analysis unit 117 calls the system initial construction unit 110 to construct a backup of the target system that is constructed in the main site 101, in the sub-site 102. If the request is a backup server start request, the backup request analysis unit 117 calls the system data change detection unit 111 to perform the processing. In some cases, the administrator explicitly requests to acquire the backup of system data on a particular server in the information processing system. In this case, the system data to be updated is already determined. Therefore, the backup request analysis unit 117 reads the mapping unit 113 based on the request analysis result to perform the backup processing for the system data on a particular server in the information processing system in the main site.

The system initial construction unit 110 is started when the backup request analysis unit 117 receives a backup system creation request from the client terminal 103. The system initial construction unit 110 constructs a backup of the information processing system 145 (information processing system 155) included in the main site 101, in the sub-site 102. In constructing the information processing system in the sub-site 102, the system initial construction unit 110 constructs a backup system in the sub-site according to the system data on the main site 101 and then, if there is user data, copies the user data to the sub-site. A backup of the user data may be created by using a known technology. In the initial backup of the system data, the system initial construction unit 110 constructs the information processing system 155 in the sub-site 102 according to the information stored in the main site system data management table 120. The information processing system 155 is constructed using a known technology. After constructing the information processing system 155, the system data on the information processing system 155 is stored in the sub-site system data management table 121. The configuration of the main site system data management table 120 will be described later.

The system data change detection unit 111 confirms whether there is a change in the system data on the information processing system 145 constructed in the main site 101. The system data change detection unit 111 receives a change notification from an agent installed in each server of the information processing system 145 in the main site 101 and a change notification from the management server 140. If a change notification is not received from an agent or the management server 140, the system data change detection unit 111 accesses the management server 140 and an agent at a periodic interval to collect the system data related to the information processing system 145 and, by comparing the collected data with the information in the system data management table 120, detects a change in the system data. If there are network apparatuses other than the management server 140 and an agent, such as a load balancer or a firewall, the system data change detection unit 111 detects a change in the system data in the same manner.

If the system data change detection unit 111 detects that the system data has been changed, the change position identification unit 112 references the main site system data management table 120 to specify the change position. If the OS version, the setting of an application, or the certificate in the system data is changed, the change position identification unit 112 specifies the target server and identifies its configuration. If the instance type of a server, the number of disks, or the number of network cards in the system data is changed, the change position identification unit 112 specifies the associated server configuration information. If the setting of the load balancer or the firewall is changed, the change position identification unit 112 also specifies the changed system configuration information.

If the change position identification unit 112 specifies that a server is changed, the mapping unit 113 references the main site system data management table 120 to specify the image identifier corresponding to the specified server. Next, the mapping unit 113 references the image mapping table 122 to specify the image identifier of the sub-site corresponding to the specified image identifier in the main site. Next, the mapping unit 113 references the sub-site system data management table 121 to specify the server identifier that has the specified image identifier in the sub-site. The configuration of the image mapping table 122 will be described later.

The mapping unit 113 also performs mapping of the system configuration information between the information processing system in the main site 101 and the information processing system in the sub-site 102. For example, if the virtualization infrastructure used in the main site differs from that used in the sub-site, there is a need for mapping the system configuration information. For example, the method of allocation of the CPU to a server in an information processing system sometimes differs between the main site and the sub-site. In some cases, the CPU core is allocated to a server in the main site while an instance type is allocated to the server in the sub-site. In this case, it is necessary to associate the system configuration information in the main site and that in the sub-site because the metric for representing the CPU performance of a server differs between the main site and the sub-site. In addition, the access control setting method may differ according to the virtualization infrastructure. In this case, too, the mapping unit 113 performs mapping.

The backup processing unit 114 performs the backup processing according to the change position specified by the change position identification unit 112. If the change position is the system disk information in a particular server, the backup processing unit 114 creates an image of the system disk of the particular server, transfers the created image to the sub-site, performs image conversion, and saves the converted image in the temporary storage 156 in the sub-site. If the change position is not in a particular server but in the firewall setting or the routing setting, the backup processing unit 114 does not transfer an image. Instead, the backup processing unit 114 updates the setting of the corresponding position of the system data of the information processing system in the sub-site 102 via the management server 150.

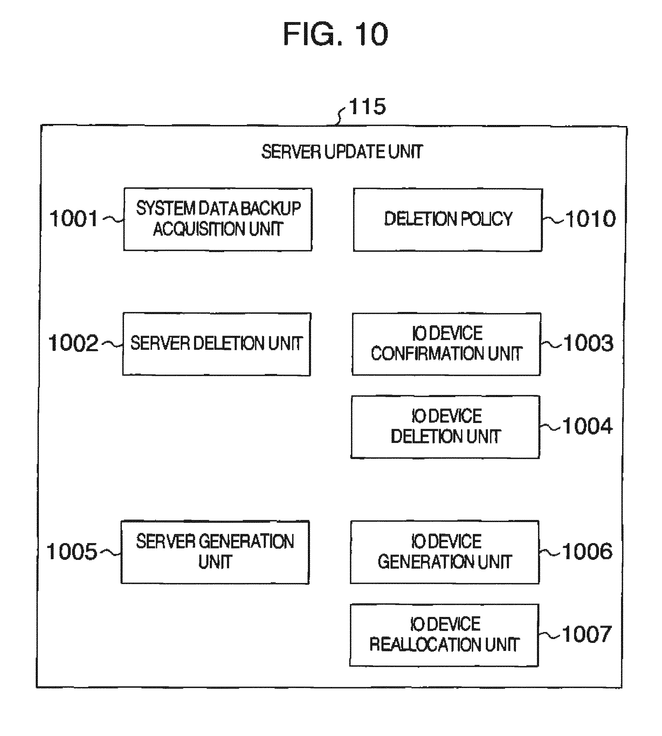

The server update unit 115 deletes the change target server in the sub-site 102, specified by the mapping unit 113, according to the pre-set deletion policy. After that, the server update unit 115 uploads the image from the temporary storage 156 in the sub-site by the backup processing unit 114, and to create a new server. The detail of the server update unit 115 will be described later with reference to FIG. 10.

After the processing of the server update unit 115 is performed, the table update unit 116 updates the content of the image mapping table 122. The content of the image mapping table 122 will be described later. The table update unit 116 also updates the content of the main site information processing system 145 and the sub-site information processing system 155. In addition, the table update unit 116 deletes the image saved in the temporary storage 156.

The backup processing unit 114 includes a configuration division unit 130, an image creation unit 131, an image transfer unit 132, a data transfer unit 133, and a division policy 135.

The division policy 135 defines a unit of server image transfer in advance. Because the division unit differs according to the type of the virtualization infrastructure to be backed up, the division policy 135 is set for each virtualization infrastructure if there is a plurality of virtualization infrastructures to be backed up.

The configuration division unit 130 divides the server configuration for each server, the system data of which is to be changed, according to the division policy 135. For example, when a set of the server and the system disk or a data disk (disk on which user data is stored) is set as a transfer unit in the division policy, the image of the data disk is created as an image different from that of the server. For example, when three disks are attached to the server and one of them is the system disk, they are divided into the server and disk 1 (system), disk 2, and disk 3.

The image creation unit 131 creates images in division units determined by the configuration division unit 130. An image may be created using a known method. Software provided by a third party or an API provided by a cloud vendor may be used.

The image transfer unit 132 transfers images, generated by the image creation unit 131, via the network between the main site 101 and the sub-site 102. When there is a plurality of images, the images may be transferred serially or may be transferred in parallel for increasing performance. When the virtualization infrastructure is different between the main site and the sub-site, the image transfer unit 132 includes the image conversion processing. The image conversion processing may be performed using a known method.

The data transfer unit 133 transfers, not an image, but user data. Because user data may be transferred using the server-based data copy function that is known, the detailed description is omitted.

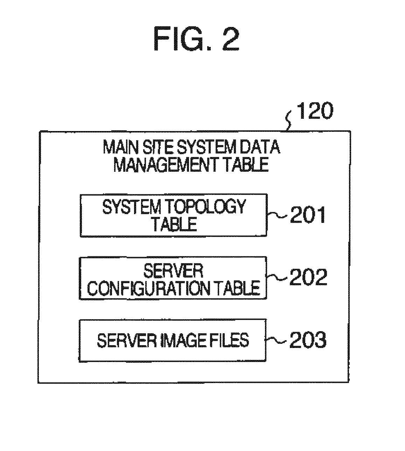

FIG. 2 is a diagram showing the configuration of the main site system data management table 120. The main site system data management table 120 includes a system topology table 201, a server configuration table 202, and a server image file 203.

The main site system data management table 120 is generated by the system initial construction unit 110, is updated by the table update unit 116, and is referenced by the change position identification unit 112 and the mapping unit 113.

The system topology table 201 is a table that manages the configuration of the information processing system 145 (the detail will be described later). The system topology table 201 keeps a list of servers configuring the information processing system 145. In addition, the system topology table 201 keeps the information about the connection among servers and the setting information on the devices other than the servers, for example, the setting information on the load balancer and the setting information on the firewall. The information stored in the system topology table 201 is not limited to the information described above (not shown).

The server configuration table 202 holds the configuration information on the servers managed by the system topology table 201. The configuration information on a server includes the CPU specification and the memory size of the server, the type and the version of the operating system installed on the server, the number of network interfaces of the server, the MAC addresses of the network interfaces, the number of disks attached to the server, and the size of each disk. The configuration information on the server is not limited to the information described above.

The server image file 203 is an image file used when a server is started. When the information processing system is configured by a plurality of servers each of which performs a different function, there is a plurality of server image files 203. The server image file 203, though arranged in the backup server 100 in this embodiment, may be arranged anywhere if it can be referenced when a server is generated in the main site or in the sub-site.

The configuration of the sub-site system data management table 121 is similar to that of the main site system data management table 120 shown in FIG. 2 and, therefore, its description is omitted.

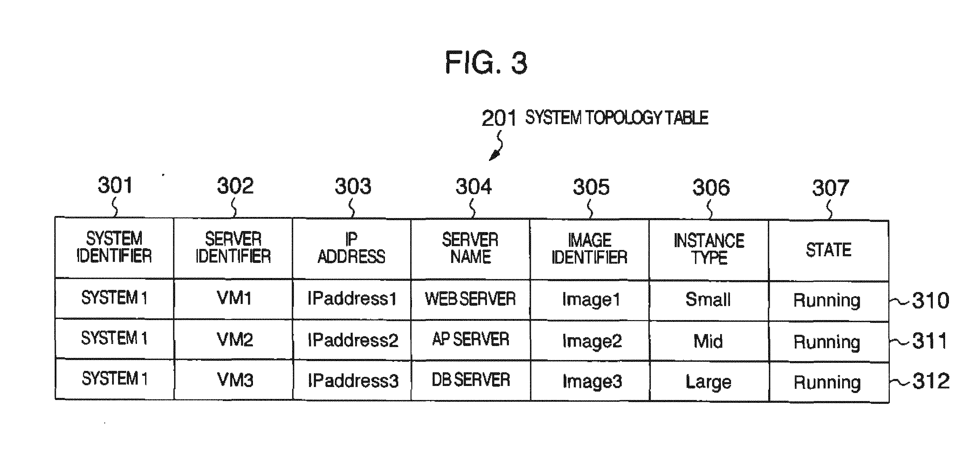

FIG. 3 is a diagram showing an example of the configuration of the system topology table 201. The system topology table 201 holds the information about the configuration of a system specified by the system identifier. The system topology table 201 includes a system identifier 301, a server identifier 302, an IP address 303, a server name 304, an image identifier 305, an instance type 306, and a state 307. The system identifier 301, the identifier of the information processing system 145 constructed in the main site 101, uniquely identifies the information processing system 145. The server identifier 302, the identifier given to a server configuring the information processing system 145, is an identifier that is automatically given by the management server 140 when the server is generated and that is unique in the information processing system. The IP address 303 is an IP address given to a server identified by the server identifier 302. The server name 304 is the name of a server identified by the server identifier 302. The image identifier 305 is the identifier of the image of a server identified by the server identifier 302. The instance type 306 is the type of an instance installed on a server identified by the server identifier 302. For example, when the cloud service is used, a plurality of instance types is provided as services from which the user selects the type of an instance for generating a server. The state 307 indicates the state of a server identified by the server identifier 302. For example, the state, such as "running", "stopped", and "pending", is displayed. In this embodiment, a system 1 is configured by three servers (VM1, VM2, VM3) and the configuration information on the servers is indicated in the rows 310, 311, and 312.

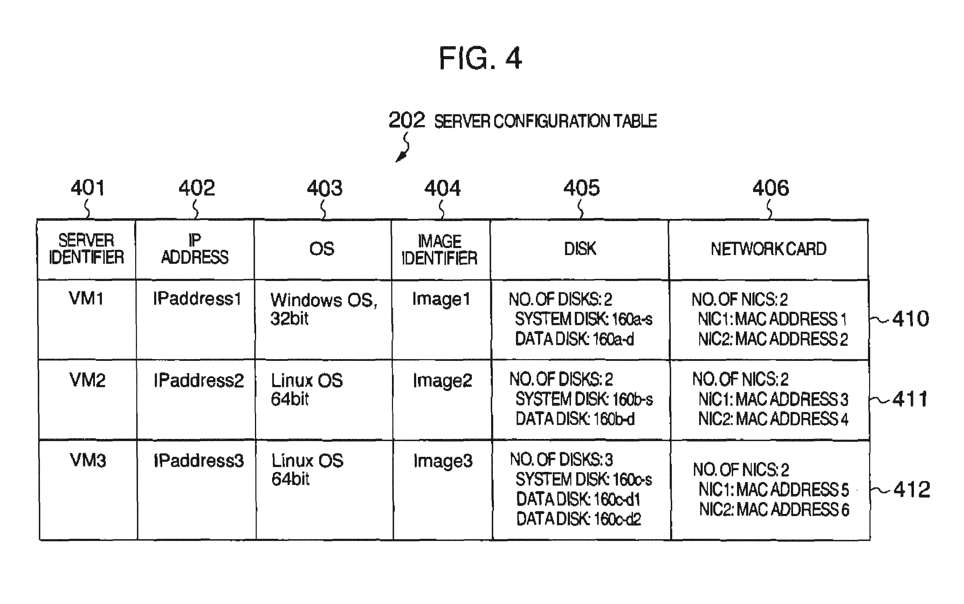

FIG. 4 is a diagram showing an example of the configuration of the server configuration table 202. The server configuration table 202 holds the parameters of the components configuring a server. The server configuration table 202 includes a server identifier 401, an IP address 402, an OS 403, an image identifier 404, a disk 405, and a network card 406. Note that the parameters of the server configuration table 202 are not limited to those given above. Any parameter necessary for configuring a server may be included.

The OS 403 manages the type and the version of the operating system installed on a server identified by the server identifier 401. The disk 405 manages the number of disks and the addresses of disks attached to a server identified by the server identifier 401. The network card 406 manages the number of network interfaces and the addresses of network interfaces provided on a server identified by the server identifier 401. For example, in the example shown in FIG. 4, VM1 includes 64-bit Linux (registered trademark) as the OS and two disks, one for the system disk and the other for the data disk. In addition, VM1 has two NICs.

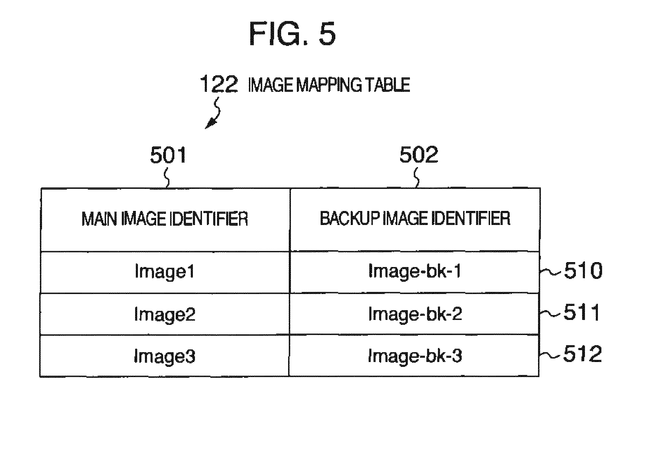

FIG. 5 is a diagram showing an example of the configuration of the image mapping table 122. The image mapping table 122 holds the correspondence between the image identifier of a server of the information processing system 145 in the main site and the backup image identifier of the corresponding server of the information processing system 155 in the sub-site. A main image identifier 501 is the server image identifier in the main site, and a backup image identifier 502 is the server image identifier in the sub-site. Each identifier, which is given when the image is created, is unique in the information processing systems 145 and 155. The image mapping table 122 is created when a backup of the information processing system 145 is acquired into the sub-site 102 and, after that, is updated each time the server configuration of the information processing system 145 is changed. When a server corresponding to a registered image is not used any more, the main image identifier 501 and the corresponding backup image identifier 502 are deleted from the image mapping table 122.

FIG. 10 is a diagram showing an example of the configuration of the server update unit 115. The server update unit 115 includes a system data backup acquisition unit 1001, a server deletion unit 1002, an IO device confirmation unit 1003, an IO device deletion unit 1004, a server generation unit 1005, an IO device generation unit 1006, an IO device reallocation unit 1007, and a deletion policy 1010. The deletion policy 1010 holds the rule indicating whether to acquire a system data backup of the update target server. For example, the rule describes "delete" when there is no need to acquire a system data backup of the update target server, and describes the rule indicating "backup acquisition" when there is a need to acquire a system data backup of the update target server. The description is not limited to those give above but any description may be used if the condition can be determined by the description.

The system data backup acquisition unit 1001 references the deletion policy 1010 and, if "backup acquisition" is described in the deletion policy, acquires the system image of the update target server and a backup of the system configuration information according to the content of the sub-site system data management table 121. The server deletion unit 1002 issues a request to the management server 150 of the sub-site 102 to delete the update target server. The server may be deleted using a known technology. The IO device confirmation unit 1003 references the server configuration table 202 in the sub-site system data management table 121 to confirm whether there is a network card or a disk associated with the update target server. For example, the IO device confirmation unit 1003 confirms whether the update target server has a data disk and confirms how many network cards that server has. If it is determined, as a result of the processing of the IO device confirmation unit 1003, that there is an IO device associated with the update target server, the IO device deletion unit 1004 deletes the identified IO device. The server generation unit 1005 creates a new server, via the management server 150, using the conversion image saved in the temporary storage 156. The IO device generation unit 1006 creates a new IO device, via the management server 150, according to the content of the server configuration table 202 in the sub-site system data management table. The IO device reallocation unit 1007 associates the server, generated by the server generation unit 1005, with the IO device created by the IO device generation unit 1006. For example, when a network card is created, the IO device reallocation unit 1007 attaches the created network card to the server.

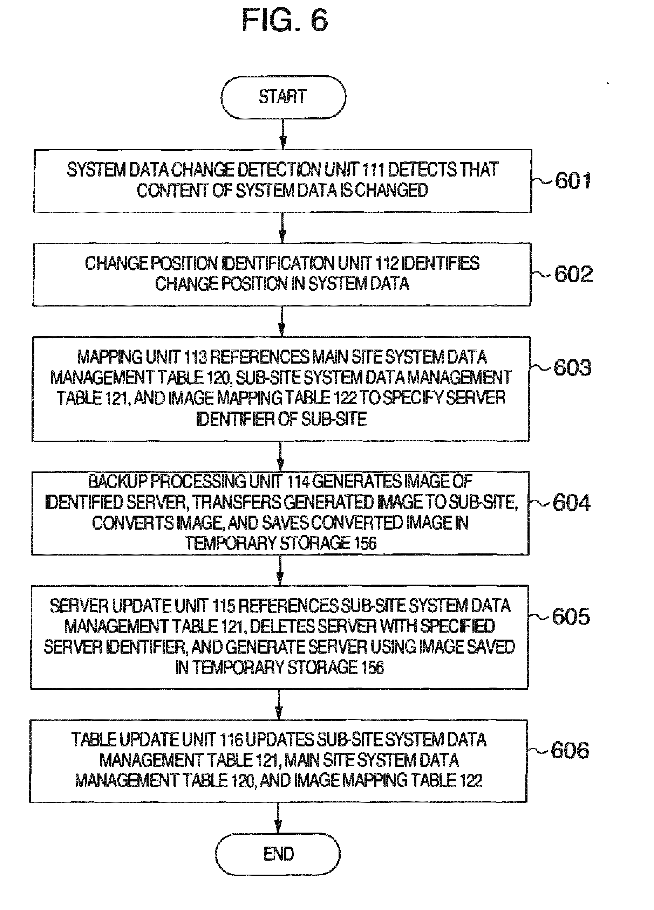

FIG. 6 is a diagram showing the backup processing flow of the system data of the information processing system 145 in the main site. In the backup processing flow of the system data of the information processing system, the system data change detection unit 111 detects that the content of the system data is changed (step 601). The content that is detected includes a change in the configuration of the server (an increase or a decrease in the number of disks, and an increase or a decrease in the number of NICs, attached to the information processing system, a change in the instance type of the server), an upgrade in the version of the OS installed in the server due to an update in the security patch, a change in the number of servers in the information processing system (for example, auto scaling), and a change in the connection relation of servers due to an update in the access control setting in the firewall. A change in the system data can be confirmed by a change notification from the management server 140 and a change notification from an agent installed in the servers of the information processing system. A change may also be confirmed by accessing the management server 140 and the agents of each server at a periodic interval, by collecting information on the servers configuring the information processing system 145, and by comparing the collected information with the content of the main site system data management table 120 held in the backup server 100. As a detection method, any method that can confirm a change in the content of the system data may be used.

After a change in the system data is detected in step 601, the change position identification unit 112 references the main site system data management table 120 to specify the change position in the system data. If the change in the system data is a change in the instance type of the server or in the type or version of the OS, the change position identification unit 112 specifies the target server (step 602). If the number of disks is increased, the change position identification unit 112 specifies to which server of the information processing system a disk is added. If the number of servers is increased, the change position identification unit 112 specifies the identifier of the added server and identifies the connection relation between the configuration information on the server and other servers. If the identified server identifier is not registered in the main site system data management table 120, a backup of the server is not created in the sub-site. In this case, step 603 is not performed but the processing of step 605 and the subsequent steps is performed.

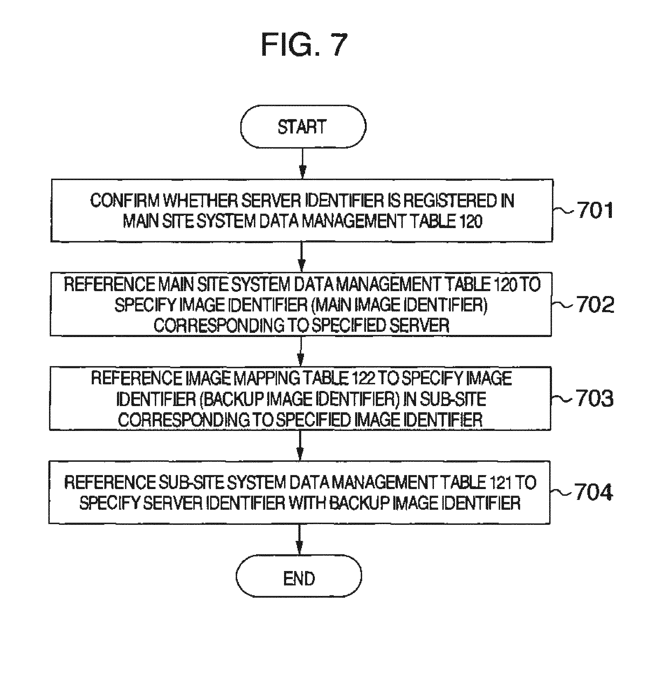

In step 603, the mapping unit 113 references the main site system data management table 120, image mapping table 122, and sub-site system data management table 121 to specify the update target server identifier in the sub-site. The detailed flow of the mapping processing will be described later (FIG. 7).

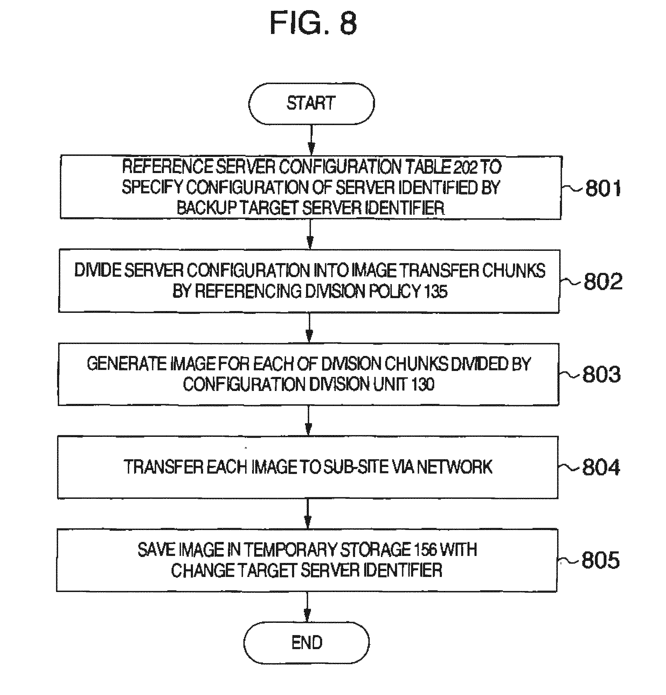

In step 604, the backup processing unit 114 generates the image of the specified server, transfers the generated image to the sub-site 102, converts the image, and saves the converted imaged in the temporary storage 156. The detailed flow of the image backup processing will be described later (FIG. 8).

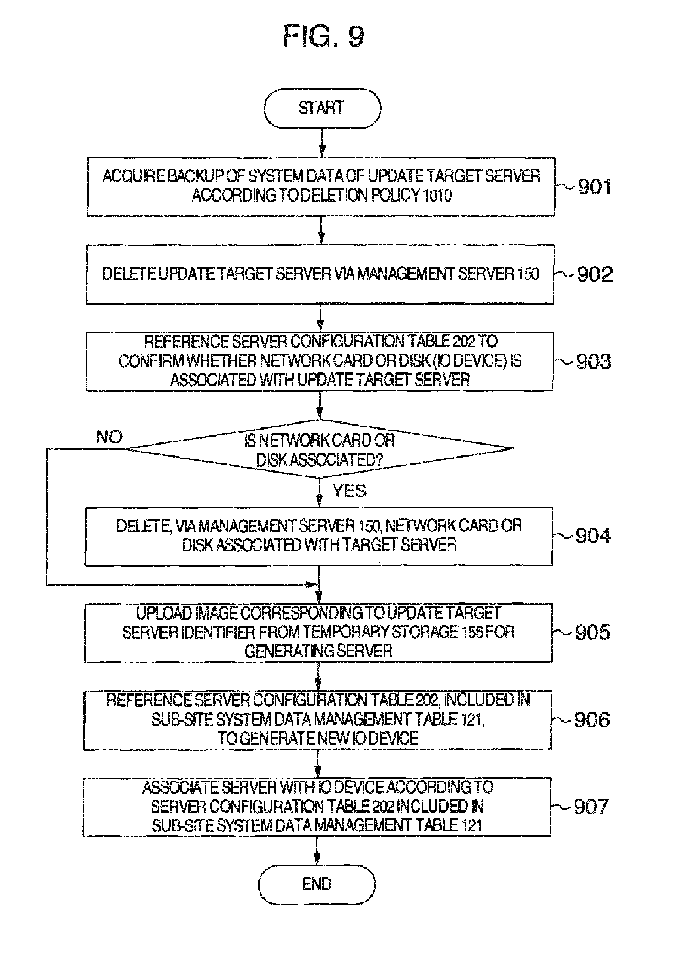

In step 605, the server update unit 115 references the sub-site system data management table 121, deletes the server with the specified server identifier, and uploads the image, saved in the temporary storage 156, to generate a new server. The detailed flow of the server update unit 115 will be described later (FIG. 9). If the server identifier is not registered, the server update unit 115 generates a new server without deleting a server.

In step 606, the table update unit 116 updates the content of the sub-site system data management table 121, main site system data management table 120, and image mapping table 122. More specifically, the table update unit 116 reflects the newly generated image identifier and newly generated server identifier, the identifiers of the network and disks associated with the server identifier, and the setting information on the updated OS onto the tables.

If there is a plurality of change positions, the processing from step 601 to step 606 is repeated.

When the system data on the information processing system 145 in the main site is changed, the execution of the steps described above allows the system data to be reflected correctly on the information processing system 155 in the sub-site.

When the administrator explicitly specifies a server, the system data of which is updated, via the client terminal 103, the flow is as described below.

When the administrator specifies a backup target server, the change target server is included in a backup processing request. Therefore, the backup request analysis unit 117 first analyzes the backup request to specify the identifier of the change target server and, after that, calls the mapping unit 113 to perform step 603. The processing flow that is performed after the mapping unit 113 is called is the same as that described above and, therefore, the description is omitted.

FIG. 7 is a diagram showing the flow of the mapping processing performed by the mapping unit 113.

When the system data on a particular server of the information processing system 145 in the main site is reflected on the sub-site, the mapping processing is performed using the main site system data management table 120, sub-site system data management table 121, and the image mapping table 122 to specify one or more servers in the sub-site the image of which is to be changed.

In step 701, the mapping unit 113 confirms whether the target server identifier is registered in the main site system data management table 120. In step 702, if the change position is in the system data of the server, the mapping unit 113 references the main site system data management table 120 to specify the image identifier corresponding to the specified server. In step 703, the mapping unit 113 references the image mapping table 122 to specify the backup image identifier in the sub-site corresponding to the main image identifier specified in step 702. In step 704, the mapping unit 113 references the sub-site system data management table 121 to specify the server identifier that has the specified image identifier in the sub-site. If the same image identifier is used by a plurality of servers, the mapping unit 113 specifies all server identifiers. Performing these steps makes it possible to specify which server in the sub-site uses the update target image.

FIG. 8 is a diagram showing the image backup processing flow. In step 801 of the image backup processing flow, the backup processing unit 114 references the server configuration table 202 to specify the configuration of a server specified by the backup target server identifier. If a plurality of servers is changed, the backup processing unit 114 specifies the configuration of each server. More specifically, the backup processing unit 114 specifies whether the change target server has a plurality of disks or a plurality of network cards.

In step 802, the backup processing unit 114 divides the server configuration of each specified server into image transfer units by referencing the division policy 135 defined in advance. For example, if the server has a plurality of disks, the backup processing unit 114 divides the disks into two: one is the system disk and the server and the other is the data disk. In step 803, the backup processing unit 114 creates an image for each of the division units divided by the configuration division unit 130.

In step 804, the backup processing unit 114 transfers each image to the sub-site via the network. The images may be transferred serially or may be transferred in parallel for increasing performance. In step 805, the backup processing unit 114 stores the image in the temporary storage 156 with the identifier of the change target server.

The image backup processing is implemented by performing the above steps the number of times equal to the number of change target servers.

FIG. 9 is a diagram showing the processing flow of the server update processing. The flow shown in FIG. 9 is described with reference to FIG. 1 and FIG. 10.

In step 901, the system data backup acquisition unit 1001 confirms the deletion policy 1010. If the acquisition of a system data backup of the update target server is described in the deletion policy 1010, the system data backup acquisition unit 1001 references the sub-site system data management table 121 to acquire the image of the server and a backup of the configuration information on the server. After that, the server deletion unit 1002 deletes the target server via the management server of the sub-site 102 (step 902).

Next, the IO device confirmation unit 1003 references the server configuration information, included in the sub-site system data management table 121, to confirm whether a network card or a disk is associated with the update target server (step 903). If there is a network card or a disk associated with the update target server, the IO device deletion unit 1004 deletes, via the management server 150, the network card or the disk associated with the update target server (step 904). In step 905, the server generation unit 1005 uploads the converted image with the change target server identifier, from the temporary storage 156 for generating a server.

In step 906, the IO device generation unit 1006 references the server configuration table 202, included in the sub-site system data management table 121, to generate a new network card or disk. In step 907, the IO device reallocation unit 1007 associates the generated network card or disk with the server according to the server configuration table 202 included in the sub-site system data management table 121. By performing the above steps, the sub-site server is updated considering the configuration information on the server.

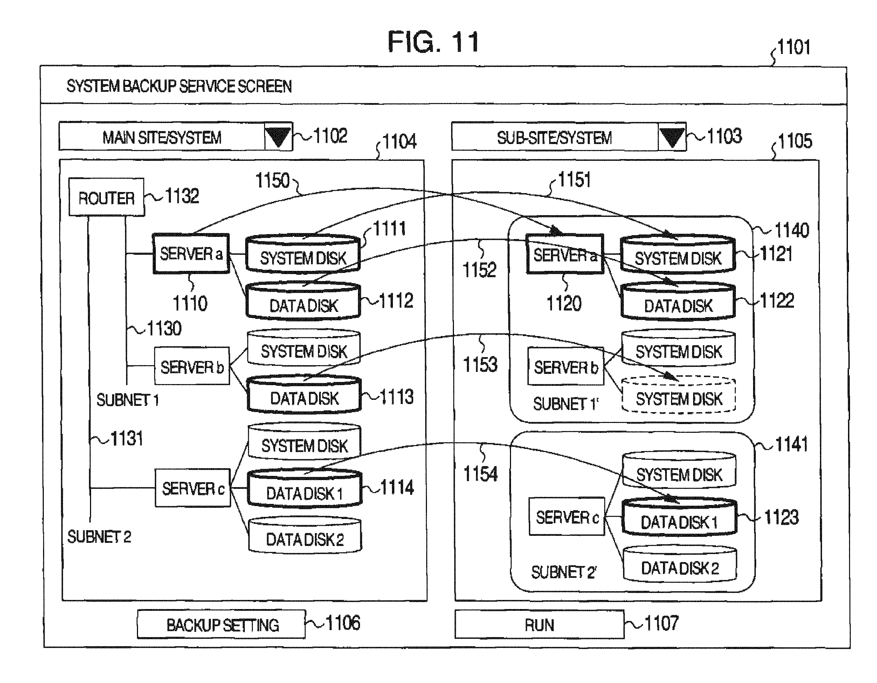

FIG. 11 is a diagram showing an example of the GUI operation screen used for the system backup service in the management I/F 106. A system backup screen 1101 includes a selection list box 1102 via which a system in the main site is specified, a selection list box 1103 via which a sub-site is specified, a main site system configuration display screen 1104, a sub-site system configuration display screen 1105, a backup setting button 1106, and a run button 1107.

On the main site system configuration display screen 1104, the configuration of the system, selected via the selection list box 1102, is displayed. For example, a server 1110, disks 1111 - 1113, subnets 1130 - 1131, and a router 1132 are displayed in this embodiment. The present invention is not limited to those display items. Any element that configures the system, such as a load balancer, a firewall, an operating system, middleware such as a database, and an application, may be included in the display items.

On the sub-site system configuration display screen 1105, the system backed up in the sub-site, selected via the selection list box 1103, is displayed. When a backup of the selected system is already arranged in the sub-site, the configuration of that system is displayed. When a backup is performed for the first time, no backup system is displayed. When a sub-site is selected, the system configuration at the previous backup time is displayed and, therefore, the system configuration may differ from the current system configuration.

The backup setting button 1106 is the start button for specifying the settings of the backup. The backup setting button 1106, when pressed, starts the setting screen via which the GUI user enters the settings such as whether to perform the backup manually or on a scheduled basis, whether to overwrite the backup target system, or whether to perform generation management.

The run button 1107 is enabled after the backup target system is selected and the administrator confirms that the backup is performed. When the administrator clicks the run button 1107, one or more system components, selected on the main site system configuration display screen 1104, are transferred to the sub-site by the backup server 100.

For example, the administrator selects a server a 1110, a system disk 1111, a data disk 1112, a data disk 1113, and data disk 1 (1114) on the main site system configuration display screen 1104, copies then to the sub-site via the drag-and-drop operation, and clicks the run button 1107. Via this GUI, not a backup of a single server in the system, but a backup of a server including the connection configuration of a system disk and a data disk can be acquired. In addition, a backup of only the data disk of a particular server can be acquired or a backup of a data disk that was not present during the previous backup can be added.

The processing and the configuration in the embodiment described above allow a change in the configuration of an information processing system constructed in the virtualization infrastructure of the main site to be quickly reflected on an information processing system constructed in the virtualization infrastructure of the sub-site to maintain compatibility between the information processing systems. This ability ensures proper operation of the information processing system in the sub-site after the operation is switched from the main site to the sub-site.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A backup device (100) connected to a first system (145) and a second system (155), said first system (145) being constructed in a first virtualization infrastructure, said second system (155) being constructed in a second virtualization infrastructure, said second system (155) being a backup of the first system (145), said backup device (100) comprising:
system data (120, 121) configured to include information about a topology of said first and second systems (145, 155) and configuration information on one or more servers (160a, 160b, 160c, 170a, 170b, 170c) configuring each of said first and second systems (145, 155);
a mapping table (122) configured to indicate a correspondence between the one or more servers (160a, 160b, 160c) configuring said first system (145) and said one or more servers (170a, 170b, 170c) configuring said second system (155);
a change position identification unit (112) configured to identify a first server in said first system (145) in which the change is generated, when the system data on said first system (145) is changed;
a mapping unit (113) configured to determine whether there is a second server in said second system (155) associated with the first server based on said mapping table (122);
a backup processing unit (114) configured to generate an image of the first server and transfers the generated image to the second virtualization infrastructure;
a server update unit (115) configured to generate a third server based on the transferred image; and
a table update unit (116) configured to update the system data (120, 121) on said first and second systems (145, 155) and said mapping table (122) based on configuration information on the third server.

2. The backup device (100) according to claim 1 wherein
if it is determined that there is the second server, said server update unit (115) deletes the second server.

3. The backup device (100) according to claim 2 wherein
said table update unit (116) changes a correspondence between the first server and the second server, registered in said mapping table (122), to a correspondence between the first server and the third server.

4. The backup device (100) according to claim 1 wherein
if it is determined that there is not the second server, said server update unit (115) registers a correspondence between the first server and the third server into said mapping table (122).

5. The backup device (100) according to claim 2, further comprising:
a policy (135) in which a transfer unit of an image to the second virtualization infrastructure is set wherein
an image of the first server is created in transfer units which is set in said policy (135).

6. The backup device (100) according to claim 2 wherein
when the second server is deleted, a backup of the second server is acquired.

7. The backup device (100) according to claim 1 wherein
the information on the topology of said first and second systems (145, 155) includes information identifying one or more servers configuring each of said first and second systems and
the configuration information on the one or more servers includes any one of an identifier of the server, a type and a version of an operating system installed in the server, an identifier of an image of the server, and information on a disk and a network card attached to the server.

8. A backup method for constructing a second system (155) in a second virtualization infrastructure, said second system (155) being a backup of a first system (145) constructed in a first virtualization infrastructure, said backup method comprising:
recording system data (120, 121) configured to include information about a topology of said first and second systems (145, 155) and configuration information on one or more servers (160a, 160b, 160c, 170a, 170b, 170c) configuring each of said first and second systems (145, 155);
recording a mapping table (122) configured to indicate a correspondence between the one or more servers (160a, 160b, 160c) configuring said first system (145) and said one or more servers (170a, 170b, 170c) configuring said second system (155);
when the system data on said first system (145) is changed, identifying a first server in said first system (145) in which the change is generated;
determining whether there is a second server in said second system (155) associated with the first server based on said mapping table (122);
generating an image of the first server and transferring the generated image to the second virtualization infrastructure;
generating a third server based on the transferred image; and
updating the system data (120, 121) on said first and second systems (145, 155) and said mapping table (122) based on configuration information on the third server.

9. The backup method according to claim 8 further comprising:
deleting the second server if it is determined that there is the second server.

10. The backup method according to claim 9 further comprising:
changing a correspondence between the first server and the second server, registered in said mapping table (122), to a correspondence between the first server and the third server.

11. The backup method according to claim 8 further comprising:
registering a correspondence between the first server and the third server into said mapping table (122) if it is determined that there is not the second server.

12. The backup method according to claim 9 wherein
a policy (135), in which a transfer unit of an image to the second virtualization infrastructure is set, is provided and
an image of the first server is created in transfer units which is set in said policy (135).

13. The backup method according to claim 9 further comprising:
acquiring a backup of the second server when the second server is deleted.

14. The backup method according to claim 8 wherein
the information on the topology of said first and second systems (145, 155) includes information identifying one or more servers configuring each of said first and second systems and
the configuration information on the one or more servers includes any one of an identifier of the server, a type and a version of an operating system installed in the server, an identifier of an image of the server, and information on a disk and a network card attached to the server.
